# EUROPÄISCHE PATENTSCHRIFT

(11) **EP 1 821 268 B1**
(45) Veröffentlichungstag und Bekanntmachung des Hinweises auf die Patenterteilung: **27.08.2014**
(21) Anmeldenummer: 06125004.9
(22) Anmeldetag: 29.11.2006
(51) Int. Cl.: G07F 9/10, G07F 11/58, A21B 3/07, A47F 3/00, B07C 5/00, B65G 47/82

(54) **Abgabeeinrichtung für Lebensmittel**
Food dispensing apparatus
Distributeur de denrées alimentaires

(30) Priorität: 02.12.2005 DE 102005057866
(43) Veröffentlichungstag der Anmeldung: 22.08.2007
(73) Patentinhaber: R. Weiss Verpackungstechnik GmbH & Co. KG, 74564 Crailsheim (DE)
(72) Erfinder: Weiss, Reinald, 74594, Kressberg (DE)
(74) Vertreter: Schlief, Thomas P.

(56) Entgegenhaltungen:
- EP-A- 0 341 564
- EP-A- 1 577 848
- EP-A- 1 591 970
- EP-A2- 0 950 995
- WO-A-2006/097448
- DE-C1- 3 918 196
- FR-A- 1 298 427
- FR-A- 2 596 631
- US-A- 5 042 637
- US-A- 5 141 128
- US-A- 5 375 737

## Beschreibung

Die vorliegende Erfindung betrifft eine Abgabeeinrichtung für Lebensmittel, insbesondere für Backwaren, zur Abgabe an Endverbraucher nach dem O-berbegriff des Anspruchs 1. Ferner betrifft die Erfindung ein Verfahren zur Abgabe von Lebensmitteln, insbesondere von Backwaren, zur Abgabe an Endverbraucher.

Im Stand der Technik sind Abgabeeinrichtungen zur Abgabe von Lebensmitteln an Endverbraucher bekannt, bei denen fertig zubereitete Lebensmittel in Behältern den Kunden zur Entnahme bereit gestellt werden. Solche Vorrichtungen dienen beispielsweise zum Verkauf von Backwaren. Dabei werden die Lebensmittel beispielsweise durch das Verkaufspersonal in Backvorrichtungen fertig gebacken und anschließend in die Behälter umgefüllt. Dort stehen sie zur Entnahme durch den Endverbraucher bereit. Nachteilig bei solchen Abgabeeinrichtungen ist, dass die darin befindlichen Lebensmittel teilweise mehrfachen Kontakt mit Kunden haben, bevor sie abverkauft werden. Dies ist sowohl aus verkaufsästhetischen Gründen als auch aus Hygiene-technischen Gründen bedenklich. Neben der zu bemängelnden Hygiene haben sich die bekannten Systeme zusätzlich als wartungsaufwendig erwiesen, da sie häufiges manuelles Reinigen und Befüllen erfordern

Eine weiter entwickelte Abgabeeinrichtung beschreibt die EP 1 577 848 A, bei der mehrere nebeneinander aufgestellte Säulen von oben mit Backwaren beschickt werden. In jeder Säule sind mehrere Drehkreuze mit jeweils mehreren voneinander getrennten Fächern übereinander angeordnet, wobei die Backwaren von einem Fach in ein nachfolgendes Fach übergeben werden. Durch aufeinander abgestimmtes und bedarfsorientiertes Drehen der Drehkreuze werden die Backwaren abwärts zur Ausgabe gefördert.

Die US 5,042,637 A offenbart eine Übergabeeinheit zur Übergabe von insbesondere Südfrüchten von einem Längsförderer auf mehrere nebeneinander angeordnete Querförderen. Hierbei werden die Früchte mittels eines Schwenkarms aus ihrer stabilen Lage auf dem Längsförderer von unten herausgehoben und auf einen der Querförderer abgeworfen.

Die WO 20061097448 A beschreibt eine Vorrichtung zur Lagerung, Behandlung und Ausgabe von Lebensmitteln, insbesondere von Backwaren, bei der eine Mehrzahl von Trägern zur Aufnahme der Lebensmittel vorgesehen ist. Eine Fördereinrichtung schafft hierbei einen geschlossenen Transportkreislauf zwischen den verschiedenen Abschnitten der Vorrichtung.

Die EP 1 591 970 A offenbart eine automatische Ausgabevorrichtung, bei der eine Vielzahl von mit Backwaren belegten Speicherträgern in einem Endlosstrang in einer Speichereinheit geführt werden, wobei die Backwaren bei Kundenanforderung von den Speicherträgem abgeworfen werden.

Die DE 39 18 196 C1 beschreibt eine Aussortiereinrichtung, wobei ankommende Stückgüter unterschiedlicher Quer- und/oder Höhenabmessungen mit einem Aussortierarm, der über einen Schwenkarm und einen Antriebsarm geführt ist, aussortierbar sind.

Die FR 2 596 631 A offenbart eine automatische Vorrichtung für das Gaststättengewerbe zum Transport von heißen Gerichten. Die Gerichte sind in mehreren Fächern übereinander in einem Gefrierschrank gelagert, aus denen sie mit mindestens einem Längsförderband auf Anforderung abgefördert und an einen Querförderer übergeben werden.

Die FR 1 298 427 A beschreibt eine Vorrichtung zur Abgabe von Stückgut mit mehreren übereinander und in Zick-Zack-Anordnung gegeneinander versetzten Förderbändern, wobei unmittelbar benachbarte Förderbänder gegenläufig angetrieben werden. Stückgüter werden hierbei von oben nach unten bis zu einer Ausgabeeinheit gefördert, wobei ein Stückgut bei der Übergabe von einem Förderband auf ein darunter angeordnetes Förderband fällt.

Die EP 0 341 564 A offenbart einen Ausgabe-Automat für Lebensmittel mit einer Lagervorrichtung, die durch mehrere übereinander angeordnete Transportbänder gebildet ist, deren Bänder jeweils in eine Übergabeposition des betreffenden Nahrungsmittels auf eine Transporteinrichtung vorbewegbar sind. Die Transporteinrichtung ist als Aufzug ausgebildet, welche die Nahrungsmittel zu einem Ofen zum Aufbacken der Nahrungsmittel transportiert, von dem die Nahrungsmittel zur Ausgabe gefördert werden.

Die US 5,141,128 beschreibt einen Vertikalförderer mit mehreren Fächem, aus denen Produkte auf ein Förderband abgekippt werden.

Aufgabe der vorliegenden Erfindung ist es, eine Abgabeeinrichtung für Lebensmittel zu schaffen, sowie ein Verfahren zur Abgabe von Lebensmitteln bereitzustellen, mit deren Hilfe die Abgabe von Lebensmitteln in hygienisch und ästhetisch einwandfreier Weise erfolgen kann. Darüber hinaus soll die Anlage besonders zuverlässig und automatisiert arbeiten.

Gelöst wird diese Aufgabe durch eine Abgabeeinrichtung für Lebensmittel gemäß den Merkmalen des Anspruchs 1.

Durch die vollständige erfindungsgemäße Kontrolle des Transportes der Lebensmittel sind diese in besonders zuverlässiger und schonender Weise innerhalb der Abgabeeinrichtung zu bewegen. Je nach Länge und Ausgestaltung der verschiedenen Abschnitte der Transporteinrichtung ist es auch möglich diese als Speicher für die Lebensmittel zu nutzen, um etwa bei Zeiten stärkerer Nachfrage Lebensmittel daraus verzögerungsfrei abzurufen. Durch die Verwendung mehrerer Abschnitte der Transporteinrichtung ist es zudem möglich, unterschiedliche Lebensmittel zu sortieren bzw. gezielt abzurufen. Liegen beispielsweise auf dem ersten Abschnitt hintereinander Baguettebrote und Schnittbrötchen, so kann der erste Abschnitt wahlweise eine der beiden Lebensmittelarten an den zweiten Abschnitt übergeben und von dort aus an den Endverbraucher übergeben.

In besonders vorteilhafter Weise ist die Abgabeeinrichtung mit einer als Förderband ausgebildeten Transporteinrichtung ausgestaltet. Dabei handelt es sich um besonders zuverlässige, erprobte und preiswerte Vorrichtungen.

Inbesonders vorteilhafter Weise ist vorgesehen, dass im Anschluss an den zweiten Abschnitt der Transporteinrichtung ein dritter Abschnitt angeordnet ist, der als Ausgabevorrichtung ausgebildet ist und einen Gehäuseaustritt aufweist. Dieser dritte Abschnitt bildet den Abschluss des Transportsystems und ist eigenständig ansteuerbar. So kann die Befüllung der Ausgabevorrichtung beispielsweise durch eine Vorwärtsförderung des zweiten Abschnitts der Transporteinrichtung geschehen, so dass die auszugebenden Lebensmittel in die Ausgabevorrichtung gelangen. Dort werden sie dann dem Endverbraucher zur Entnahme bereit gestellt.

Ganz besonders vorteilhaft ist es dabei, wenn die Ausgabevorrichtung die Abgabeeinrichtung im Ruhezustand, im Ausgabezustand und den Zwischenzuständen nach außen hin abschließt. Hierdurch ist gewährleistet, dass kein Endverbraucher mit den übrigen in der Abgabeeinrichtung befindlichen Lebensmitteln in Kontakt gelangen kann. Lediglich die in die Ausgabevorrichtung transportierten und zur Ausgabe bestimmten Lebensmittel kann der Kunde erreichen und entnehmen. Hierdurch ist die erforderliche Hygiene stets gewährleistet.

Als ebenfalls vorteilhaft hat es sich erwiesen, wenn der erste Abschnitt der Transporteinrichtung zwei übereinander angeordnete Förderbänder aufweist. Diese Förderbänder vergrößern zum einen die Kapazität der Abgabeeinrichtung. Dies erfolgt sowohl im Hinblick auf die von der Abgabeeinrichtung zu speichernde Lebensmittelmenge als auch die maximal durchzusetzende Lebensmittelmenge. Darüber hinaus erlauben diese Förderbänder beispielsweise auch eine Befüllung der Abgabeeinrichtung von einer in der Nähe angeordneten automatischen Backstation, so dass ein Verbund zwischen Backstation und Abgabeeinrichtung möglich ist.

Als ganz besonders vorteilhafte Ausführungsform hat es sich bewährt, wenn der zweite Abschnitt der Transporteinrichtung zwei oder mehr nebeneinander angeordnete Förderbänder aufweist. Auf diesen nebeneinander angeordneten Förderbändern besteht die Möglichkeit, die über den ersten Abschnitt der Transporteinrichtung zugeführten Lebensmittel nach ihrer Art bzw. Sorte auf den jeweiligen Förderbändern des zweiten Abschnitts getrennt aufzulegen. So kann beispielsweise bei der Ausgabe von Backwaren ein Förderband des zweiten Abschnitts zur Ausgabe von Schnittbrötchen dienen, wohingegen ein anderes Förderband des zweiten Abschnitts zur Ausgabe von Baguettebroten oder einer anderen Sorte dienen kann. In der Praxis haben sich dabei vier bis acht, insbesondere sechs nebeneinander angeordnete Förderbänder bewährt, da damit die am häufigsten verkauften Warenarten gut darstellbar sind. Selbstverständlich ist es auch möglich mehrere Reihen dieser Förderbänder übereinander anzuordnen.

Bei einer ganz besonders bevorzugten Ausführungsform der Erfindung ist vorgesehen, dass zwischen dem ersten Abschnitt der Transporteinrichtung und dem zweiten Abschnitt eine bauliche Trennung, insbesondere eine Wand, mit einer Verbindungsöffnung angeordnet ist. Hierdurch können die im Verkaufsraum angeordneten Abschnitte der Abgabeeinrichtung besonders platzsparend ausgeführt werden, wodurch kostbare Verkaufsfläche im Verkaufsraum eingespart wird. Statt dessen ist bei dieser Ausführungsform zumindest der erste Abschnitt der Transporteinrichtung in einem zum Verkaufsraum benachbarten Gebäudeabschnitt untergebracht. Dies kann beispielsweise ein Lagerraum oder auch ein Kellerraum sein. Dabei ist es sogar möglich, diesen Raum auf einer anderen Ebene als den Verkaufsraum anzuordnen.

Um einen stets einwandfreien Abschluss der Abgabeeinrichtungen nach außen zu gewährleisten, ist es vorteilhaft, wenn der dritte Abschnitt der Transporteinrichtung schwenkbare Schalenelemente aufweist. Diese schwenkbaren Schalenelemente können beispielsweise Rohrsegmente mit einer kreisrunden Grundgeometrie sein, die besonders gut um ihre Längsachse drehbar sind und mit der Abgabeeinrichtung verbunden sind. Im geschlossenen Zustand verschließen sie das jeweilige Ausgabefach und verhindern, dass ein abgegebenes Lebensmittel unbeabsichtigt aus dem Gehäuse austritt. Im geöffneten Zustand geben sie den Ausgabebereich des Lebensmittels frei aber verschließen gleichzeitig den weiteren Zutritt in die Maschine, so dass diese in jedem Betriebszustand nach außen hin abgeschlossen ist.

Gleichermaßen vorteilhaft ist es auch, wenn das übrige Gehäuse die Lebensmittel gegenüber dem Endverbraucher vollständig abschirmt. Neben der Ausgabeeinrichtung ist damit auch im Bereich des übrigen Gehäuses gewährleistet, dass die Waren in allen übrigen Positionen innerhalb der Abgabevorrichtung nicht mit den Kunden bzw. Endverbrauchern in Kontakt kommen können.

Für eine längerzeitige Lagerung der Lebensmittel ist es auch vorteilhaft, wenn der innerhalb des Gehäuses liegende Bereich klimatisiert ist. So können beispielsweise Backwaren mit entsprechender Warmhaltung länger in einem qualitativ hochwertigen Zustand angeboten werden.

Zur Förderung des Absatzes ist es darüber hinaus vorteilhaft, wenn das Gehäuse zumindest teilweise einsehbar ist. So können Kunden die innerhalb der Abgabeeinrichtung befindlichen Waren direkt in Augenschein nehmen und daraufhin ihre Kaufentscheidung überdenken.

Für eine besonders leichte Bedienung durch den Endverbraucher ist es besonders günstig, wenn die Abgabeeinrichtung eine Eingabevorrichtung zur Eingabe der gewünschten Warenart und -menge aufweist. Diese Eingabevorrichtung ist vorzugsweise an der Vorderseite der Abgabeeinrichtung angeordnet. Besonders vorteilhaft ist es dabei, wenn die Eingabeeinrichtung in unmittelbarer Nähe der Fördereinrichtung angeordnet ist, deren Ausgabe sie ansteuert. So kann der Endverbraucher besonders einfach einen Bezug zwischen der Eingabeeinrichtung und der Ausgabestelle bzw. der Art der auszugebenden und auf der Fördereinrichtung gelagerten Lebensmittel herstellen.

Für eine automatisierte Ausgestaltung der erfindungsgemäßen Abgabeeinrichtung ist es besonders günstig, wenn diese an wenigstens eine elektrische und/oder mechanische Steuerungseinrichtung zur Steuerung der Abgabefunktion angebunden ist. Hierzu sind im Stand der Technik zahlreiche, insbesondere elektronische, programmierbare Steuerungseinrichtungen bekannt, mit deren Hilfe Maschinenfunktionen steuerbar sind. Auch komplexere Aufgaben, wie beispielsweise die Überwachung der eingehenden Warenart, der eingehenden Warenmenge und des Eingangszeitpunktes können mit solchen Steuerungen überwacht und kontrolliert werden. Damit ist es beispielsweise möglich, auch überlagerte Lebensmittel innerhalb der Abgabeeinrichtung zu identifizieren und bei Bedarf wieder aus dieser abzuführen, ohne dass diese verkauft werden. Darüber hinaus ist es durch die Anbindung an eine Steuerungseinrichtung möglich die erfindungsgemäße Abgabeeinrichtung in einen Verbund beispielsweise mit einem Backautomaten zu betreiben, so dass ein weitestgehend automatisiertes System entsteht, welches beispielsweise Backwaren in einem Supermarkt weitgehend automatisiert zubereitet und an den Endverbraucher abgeben kann.

Zur Aussonderung von überlagerten Lebensmitteln ist eine Sammel- oder Austrittsvorrichtung vorgesehen. Über die Austrittsvorrichtung können die übergelagerten Lebensmittel beispielsweise mittels umgekehrt laufender Förderbänder aus den verschiedenen Abschnitten ausgegeben werden. Alternativ ist es aber auch möglich, einen Sammelbehälter innerhalb der Abgabeeinrichtung vorzusehen, der beispielsweise am Ende des Arbeitstages geleert wird.

Die Aufgabe wird ebenfalls durch ein Verfahren gemäß den Merkmalen des Anspruchs 12 gelöst.

Auch hierdurch ergeben sich die bereits zuvor genannten Vorteile, ähnlich, wie sie bei der vorstehend beschriebenen Vorrichtung bereits genannt wurden.

Weitere Vorteile der Erfindung ergeben sich aus den zugehörigen Unteransprüchen oder sind im Zusammenhang mit den nachfolgenden Ausführungsbeispielen und der Zeichnungen beschrieben.

Es zeigen darin:
- **Figur 1**: eine Vorderansicht einer erfindungsgemäßen Abgabeeinrichtung;
- **Figur 2**: eine Seitenansicht der Ausführungsform nach Figur 1 einer erfindungsgemäßen Abgabeeinrichtung;
- **Figur 3**: eine Seitenansicht einer weiteren Ausführungsform einer erfindungsgemäßen Abgabeeinrichtung, und
- **Figur 4**: eine Seitenansicht einer Ausführungsform einer erfindungsgemäßen Abgabeeinrichtung mit einer baulichen Trennung.

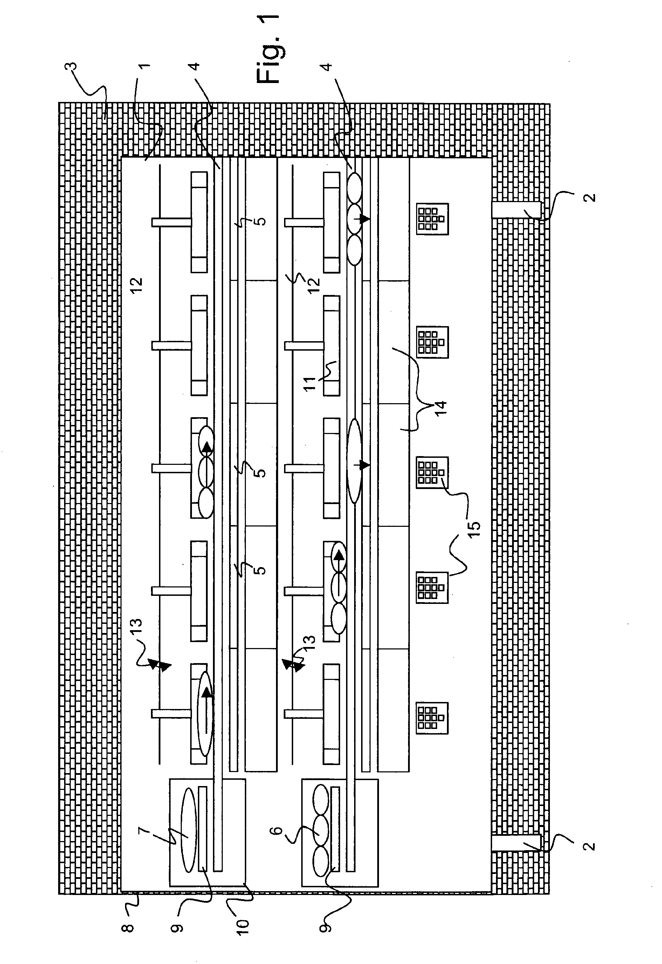

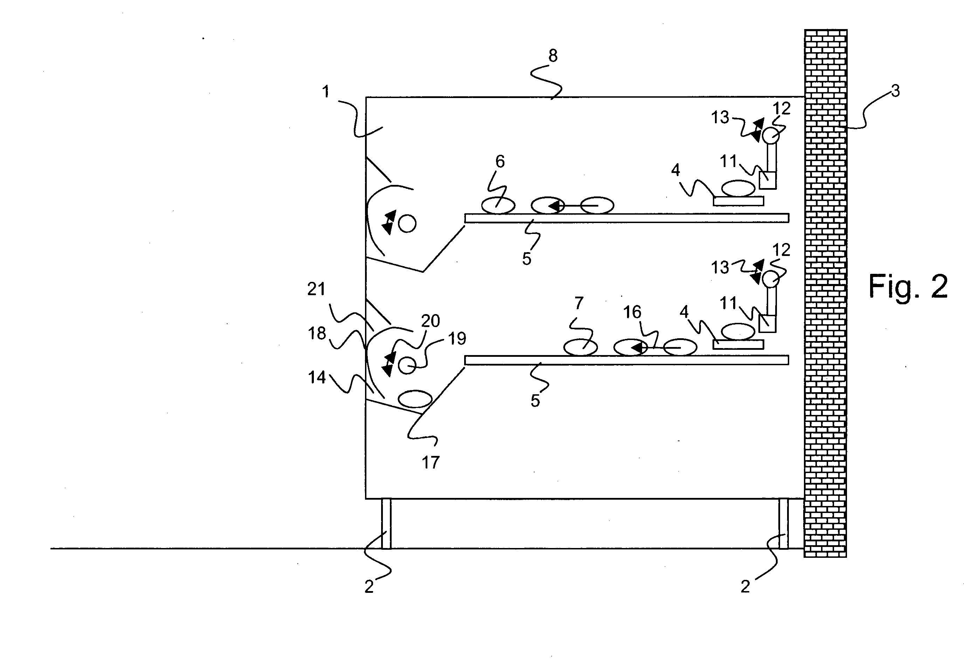

In Figur 1 ist eine erfindungsgemäße Abgabeeinrichtung 1 in einer Vorderansicht dargestellt. Die Abgabeeinrichtung 1 steht auf Füßen 2 vor einer Wand 3. Zwei in horizontaler Richtung verlaufende Förderbänder 4 bilden einen ersten Abschnitt einer Transporteinrichtung. Etwas darunter angeordnet liegen fünf nebeneinander angeordnete Förderbänder 5, die sich normal zur Bildebene erstrecken und die Waren von der Wand weg nach vorne zum Endverbraucher transportieren. Die Waren sind im vorliegenden Fall Schnittbrötchen 6 und Baguettebrote 7. Die gesamte Abgabeeinrichtung 1 ist von einem Gehäuse 8 umgeben, welches die Abgabeeinrichtung vollständig umschließt. Die Zufuhr der Waren erfolgt mittels Förderbändern 9, welche die Schnittbrötchen 6 bzw. Baguettebrote 7 von einem nicht dargestellten Backautomaten kommend durch einen Mauerdurchtritt 10 auf die Förderbänder 4 transportieren. Von dort werden sie parallel zur Vorderseite der Abgabeeinrichtung 1 entlang der Förderbänder 5 transportiert und an geeigneter Stelle mittels Schieber 11 vom Förderband 4 abgestoßen und auf das Förderband 5 aufgelegt. Die Schieber 11 sind an einer Drehachse 12 befestigt und jeweils unabhängig voneinander in Richtung des Pfeils 13 um die Drehachse 12 drehbar, so dass die Waren auf die darunter liegenden Förderbänder 5 abgestoßen werden können. Unterhalb der Förderbänder 5 sind noch Ausgabevorrichtungen 14 angeordnet, in welche die angeforderten Waren eingebracht werden. Die Funktionsweise der Ausgabevorrichtungen wird in Figur 2 noch näher erläutert.

Die Menge und Art der angeforderten Waren werden vom Endverbraucher über Eingabevorrichtungen 15 vorgewählt.

In Figur 2 ist die Ausführungsform der Abgabeeinrichtung 1 nach Figur 1 in einer Seitenansicht dargestellt. Wiederum zu erkennen ist das Gehäuse 8, welches auf den Füßen 2 steht und direkt an der Wand 3 anliegt. Die Förderbänder 5 des zweiten Abschnitts der Transporteinrichtung verlaufen bei dieser Ansicht in horizontaler Richtung. Normal zur Bildebene erstrecken sich die Förderbänder 4 des ersten Abschnitts der Transporteinrichtung mit den darauf liegenden Waren in Form von Baguette- und Schnittbrötchen 6, 7. Gut erkennbar in dieser Ansicht ist die Funktionsweise des Schiebers 11, der sich um die Drehachse 12 in Richtung des Pfeils 13 bewegt, um das auf dem Förderband 4 befindliche Lebensmittel auf das darunter liegende Förderband 5 abzustoßen. Nach der Übergabe werden die Lebensmittel in Richtung des Pfeils 16 nach vorne zur Ausgabevorrichtung 14 transportiert. Dort fallen sie vom Förderband 5 ab und gelangen in eine Vertiefung 17, wo sie zur Ausgabe bereit liegen. Hierzu wird eine Abdeckung 18, die ähnlich einem Schalenelement ausgebildet ist, um eine Drehachse 19 gedreht. Durch das Drehen der Abdeckung 18 in Richtung des Pfeils 20 wird eine Zugangsöffnung 21 freigegeben und gleichzeitig der Zugang zum Förderband 5 verschlossen. Hierdurch wird es dem Kunden unmöglich gemacht, durch Hineingreifen in die Abgabeeinrichtung 1 an die übrigen Lebensmittel zu gelangen.

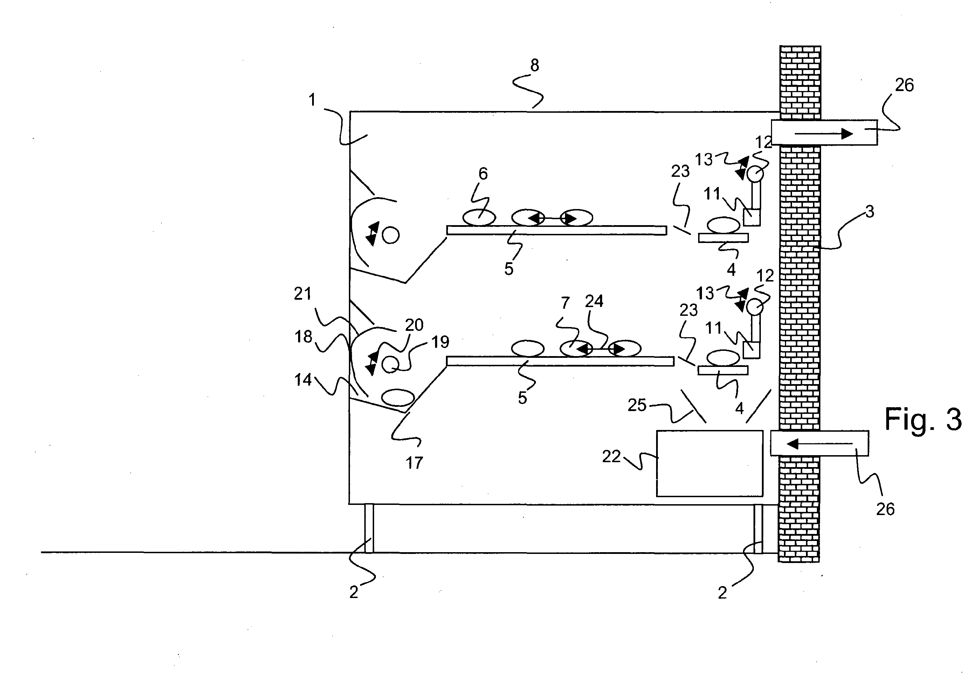

In Figur 3 ist eine weitere Ausführungsform einer erfindungsgemäßen Abgabeeinrichtung gezeigt, die zusätzlich über einen Sammelbehälter 22 für überlagerte Lebensmittel verfügt. Hierzu werden die Lebensmittel mit dem Schieber 11 zunächst eine Rampe 23 hinauf auf das Förderband 5 bewegt. Dort stehen sie zum Abverkauf bereit. In diesem Fall werden sie in Richtung des Pfeils 24 nach links bewegt, um über die Ausgabevorrichtung 14 ausgegeben zu werden. Nach längerer Zeit ist das Lebensmittel in der Regel jedoch überlagert und wird dann nach rechts in Richtung des Pfeils 24 zurückbewegt, worauf es über die Rampe 23 zurück auf das Förderband 4 gelangt. Das Förderband 4 transportiert das überlagerte Lebensmittel dann innerhalb des Gehäuses 8 zu einem Trichter 25, über den es in den Sammelbehälter 22 hinabfällt. Dieser Sammelbehälter kann beispielsweise zum Ladenschluss hin einmal täglich geleert werden, um die überlagerten Lebensmittel zu entnehmen.

Zur längeren Frischhaltung der Lebensmittel innerhalb des Gehäuses 8 weist diese eine Anschlussleitung einer nicht dargestellten Klimaanlage auf, mit deren Hilfe das Klima innerhalb des Gehäuses in der gewünschten Weise einstellbar ist. So können beispielsweise Backwaren durch entsprechende Warmhaltung länger in einem Frischezustand gehalten werden.

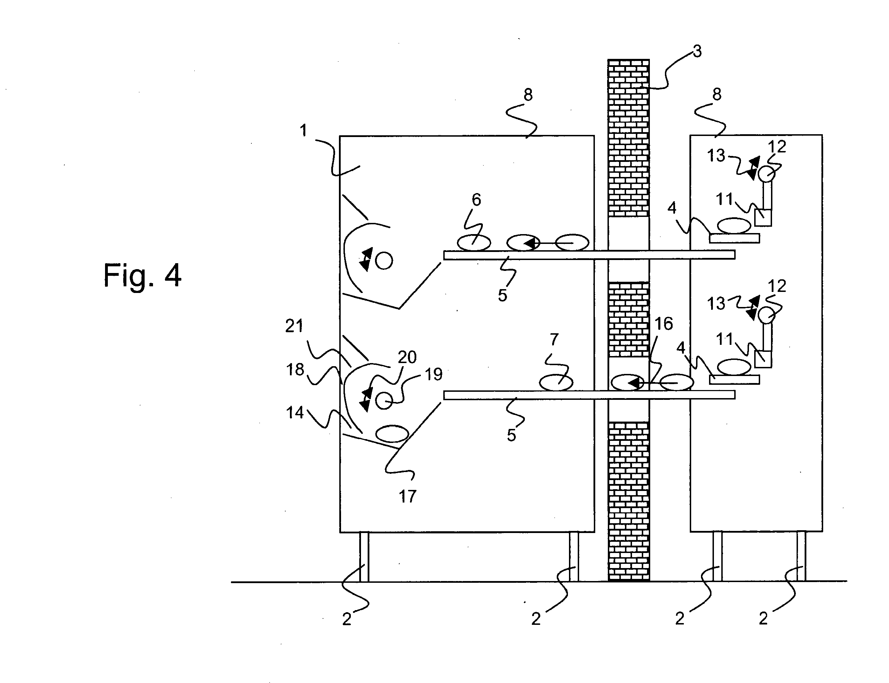

In Figur 4 ist eine Abgabeeinrichtung 1 dargestellt, die vom Aufbau weitgehend mit der Abgabeeinrichtung 1 nach Figur 2 übereinstimmt. Abweichend von der Ausführungsform nach Figur 2 ist hierbei die Anordnung von Abschnitten der Abgabeeinrichtung 1 auf zwei unterschiedlichen Seiten der Wand 3. Während beispielsweise der links dargestellte verkaufsraumseitige Abschnitt nun deutlich weniger Bauraum benötigt, ist der rechts dargestellte Abschnitt hinter der Wand 3, etwa in einem Lagerraum angeordnet. Dort kann dann auch eine Backeinrichtung zur Zubereitung von Backwaren oder ähnlichen frischen Lebensmitteln angeordnet sein. Neben der Einsparung von Verkaufsfläche bietet diese Anordnung noch den Vorteil, dass auch keine störenden Emissionen wie etwa Gerüche oder Abwärme in den Verkaufsbereich gelangt. Bei der gezeigten Ausführungsform sind die Förderbänder 4 des ersten Abschnitts der Transporteinrichtung in zwei Reihen übereinander angeordnet. Orthogonal davon wegführend verlaufen die Förderbänder 5 des zweiten Abschnitts der Transporteinrichtung. Um die Lebensmittel vom rechten Abschnitt der Abgabeeinrichtung 1 zum linken Abschnitt transportieren zu können, sind in der Wand 3 wiederum Mauerdurchtritte 10 vorgesehen. Bei Ausführungsformen mit größeren Kapazitäten ist es möglich eine Vielzahl von Förderbändern 5 nebeneinander anzuordnen. In diesem Fall ist dann eine Mehrzahl von Mauerdurchtritten 10 oder ein Mauerdurchtritt 10 mit einer länglichen Ausbildung vorzusehen. Wie dargestellt können auch mehrere Reihen der nebeneinanderliegend angeordneten Förderbänder 5 übereinander angeordnet werden. Hierdurch ergibt sich eine zusätzliche Erhöhung der möglichen Abgabekapazität.

Durch Anpassung der Klimatisierung ist es zudem möglich, neben den beschriebenen Backwaren auch andere zubereitete Waren auf diese Weise auszugeben, wie beispielsweise Fleisch- oder Wurstwaren, die bei entsprechender Kühlung ausgegeben werden können.

## Patentansprüche

1. Abgabeeinrichtung für Lebensmittel (6, 7), insbesondere für Backwaren, zur Abgabe an Endverbraucher, mit einem Gehäuse (8) und einer zugehörigen Transporteinrichtung, wobei ein erster Abschnitt der Transporteinrichtung die Lebensmittel (6, 7) in kontrollierter Weise im Wesentlichen parallel zur Vorderseite der Abgabeeinrichtung (1) bewegt, und ein zweiter Abschnitt der Transporteinrichtung die Lebensmittel in kontrollierter Weise im Wesentlichen in Richtung zur Vorderseite der Abgabeeinrichtung (1) bewegt, wobei eine Übergabeeinrichtung, welche motorisch angetriebene Schieber (11) aufweist, die Lebensmittel (6, 7) von Förderbändern (4) des ersten Abschnitts der Transporteinrichtung an Förderbänder (5) des zweiten Abschnitts der Transporteinrichtung übergibt, und wobei im Anschluss an den zweiten Abschnitt der Transporteinrichtung ein dritter Abschnitt angeordnet ist, der als Ausgabevorrichtung (14) ausgebildet ist, **dadurch gekennzeichnet, dass** Rampen (23) zwischen den Förderbändern (4) des ersten Abschnitts und den Förderbändern (5) des zweiten Abschnitts angeordnet sind, wobei Lebensmittel (6, 7) mit einem besagten Schieber (11) von einem besagten Förderband (4) des ersten Abschnitts eine besagte Rampe (23) hinauf auf ein besagtes Förderband (5) des zweiten Abschnitts hinaufbewegbar sind, um über die besagte Ausgabevorrichtung (14) ausgegeben zu werden, und wobei im Falle einer Überlagerung eines Lebensmittels (6, 7) dieses über die besagte Rampe (23) zurück auf das besagte Förderband (4) gelangt, welches das überlagerte Lebensmittel (6, 7) zu einem Sammelbehälter (22) zu transportieren vermag.

2. Abgabeeinrichtung nach einem der vorhergehenden Ansprüche, **dadurch gekennzeichnet, dass** die Ausgabevorrichtung (14) die Abgabeeinrichtung (1) im Ruhezustand, im Ausgabezustand und den Zwischenzuständen nach außen hin abschließt.

3. Abgabeeinrichtung nach einem der vorhergehenden Ansprüche, **dadurch gekennzeichnet, dass** der erste Abschnitt der Transporteinrichtung zwei übereinander angeordnete Förderbänder (4) aufweist.

4. Abgabeeinrichtung nach einem der vorhergehenden Ansprüche, **dadurch gekennzeichnet, dass** der zweite Abschnitt der Transporteinrichtung zwei oder mehr nebeneinander angeordnete Förderbänder (5) aufweist.

5. Abgabeeinrichtung nach einem der vorhergehenden Ansprüche, **dadurch gekennzeichnet, dass** zwischen dem ersten Abschnitt der Transporteinrichtung und dem zweiten Abschnitt eine bauliche Trennung, insbesondere eine Wand (3), mit einer Verbindungsöffnung angeordnet ist.

6. Abgabeeinrichtung nach einem der vorhergehenden Ansprüche, **dadurch gekennzeichnet, dass** der dritte Abschnitt der Transporteinrichtung schwenkbare Schalenelemente (18) aufweist.

7. Abgabeeinrichtung nach einem der vorhergehenden Ansprüche, **dadurch gekennzeichnet, dass** das Gehäuse (8) die Lebensmitteln (6, 7) gegenüber den Endverbrauchern vollständig abschirmt.

8. Abgabeeinrichtung nach einem der vorhergehenden Ansprüche, **dadurch gekennzeichnet, dass** der innerhalb des Gehäuses (8) liegende Bereich klimatisiert ist.

9. Abgabeeinrichtung nach einem der vorhergehenden Ansprüche, **dadurch gekennzeichnet, dass** das Gehäuse (8) zumindest teilweise einsehbar ist.

10. Abgabeeinrichtung nach einem der vorhergehenden Ansprüche, **dadurch gekennzeichnet, dass** die Abgabeeinrichtung (1) eine Eingabevorrichtung (15) zur Eingabe der gewünschten Warenart und - menge aufweist.

11. Abgabeeinrichtung nach einem der vorhergehenden Ansprüche, **dadurch gekennzeichnet, dass** die Abgabeeinrichtung (1) an wenigstens eine elektronische und/oder mechanische Steuerungseinrichtungen zur Steuerung der Abgabefunktion angebunden ist.

12. Verfahren zur Abgabe von Lebensmitteln (6, 7), insbesondere Backwaren, insbesondere zur Abgabe an Endverbraucher, wobei die Lebensmittel (6, 7) mittels eines ersten Abschnitts (4) einer Transporteinrichtung in kontrollierter Weise im Wesentlichen parallel zur Vorderseite der Abgabeeinrichtung (1) einem Gehäuse (8) zugeführt und ggf. zwischengelagert werden, und anschließend daran die Lebensmittel (6, 7) mittels eines zweiten Abschnitts (5) der Transporteinrichtung in kontrollierter Weise im Wesentlichen in Richtung zur Vorderseite der Abgabeeinrichtung (1) bewegt werden, wobei eine Übergabeeinrichtung, welche motorisch angetriebene Schieber (11) aufweist, die Lebensmittel (6, 7) von Förderbändern (4) des ersten Abschnitts der Transporteinrichtung an Förderbänder (5) des zweiten Abschnitts der Transporteinrichtung übergibt, wobei im Anschluss an den zweiten Abschnitt der Transporteinrichtung ein dritter Abschnitt angeordnet ist, der als Ausgabevorrichtung (14) ausgebildet ist, **dadurch gekennzeichnet, dass** Rampen (23) zwischen den Förderbändern (4) des ersten Abschnitts und den Förderbändern (5) des zweiten Abschnitts angeordnet sind, wobei Lebensmittel (6, 7) mit einem besagten Schieber (11) von einem besagten Förderband (4) des ersten Abschnitts eine besagte Rampe (23) hinauf auf ein besagtes Förderband (5) des zweiten Abschnitts hinaufbewegt werden, um über die besagte Ausgabevorrichtung (14) ausgegeben zu werden, und wobei im Falle einer Überlagerung eines Lebensmittels (6, 7) dieses über die besagte Rampe (23) zurück auf das besagte Förderband (4) gelangt, welches das überlagerte Lebensmittel (6, 7) zu einem Sammelbehälter (22) transportiert.

13. Verfahren nach einem der vorhergehenden Ansprüche, **dadurch gekennzeichnet, dass** die Lebensmittel (6, 7) bis zum Ausgabezeitpunkt mittels des Gehäuses (8) vom Endverbraucher und der Umgebung getrennt gehalten werden.

14. Verfahren nach einem der vorhergehenden Ansprüche, **dadurch gekennzeichnet, dass** die Lebensmittel (6, 7) mittels des zweiten Abschnitts der Transporteinrichtung nach Arten bzw. Sorten sortiert werden.

15. Verfahren nach einem der vorhergehenden Ansprüche, **dadurch gekennzeichnet, dass** die Lebensmittel (6, 7) innerhalb des Gehäuses klimatisiert gelagert werden.

## Claims

1. A dispensing device for food products (6, 7), particularly for baked goods, for dispensing to end consumers, having a housing (8) and an associated transport device, a first segment of the transport device displacing the food products (6, 7) substantially parallel to the front side of the dispensing device (1) in a controlled manner, and a second segment of the transport device transporting the food products (6, 7) substantially in the direction toward the front side of the dispensing device (1) in a controlled manner, a transfer device comprising motorized pushers (11) transferring the food products (6, 7) from conveyor belts (4) of the first segment of the transport device to conveyor belts (5) of the second segment of the transport device, and a third segment implemented as an output device (14) being disposed downstream of the second segment of the transport device, **characterized in that** ramps (23) are disposed between the conveyor belts (4) of the first segment and the conveyor belts (5) of the second segment, wherein food products (6, 7) can be moved from such a conveyor belt (4) of the first segment up such a ramp (23) onto such a conveyor belt (5) of the second segment by means of such a pusher (11) in order to be output by means of said output device (14), and wherein in case of a food product (6, 7) being stored too long said product returns onto said conveyor belt (4) by means of said ramp (23), said conveyor belt being able to transport the food product (6, 7) being stored too long to a collection container (22).

2. The dispensing device according to the preceding claim, **characterized in that** the output device (14) closes off the dispensing device (1) to the outside in the rest state, in the dispensing state and in intermediate states.

3. The dispensing device according to any one of the preceding claims, **characterized in that** the first segment of the transport device comprises two conveyor belts (4) disposed one above the other.

4. The dispensing device according to any one of the preceding claims, **characterized in that** the second segment of the transport device comprises two or more conveyor belts (5) disposed adjacent to one other.

5. The dispensing device according to any one of the preceding claims, **characterized in that** a structural separation, particularly a wall (3) having a connecting opening, is disposed between the first segment of the transport device and the second segment.

6. The dispensing device according to any one of the preceding claims, **characterized in that** the third segment of the transport device comprises pivoting shell elements (18).

7. The dispensing device according to any one of the preceding claims, **characterized in that** the housing (8) completely covers the food products (6, 7) relative to the end consumers.

8. The dispensing device according to any one of the preceding claims, **characterized in that** the area within the housing (8) is climate-controlled.

9. The dispensing device according to any one of the preceding claims, **characterized in that** the interior of the housing (8) is at least partially visible.

10. The dispensing device according to any one of the preceding claims, **characterized in that** the dispensing device (1) comprises an input device (15) for inputting the desired type and quantity of goods.

11. The dispensing device according to any one of the preceding claims, **characterized in that** the dispensing device (1) is connected to at least one electronic and/or mechanical control device for controlling the dispensing function.

12. A method for dispensing food products (6, 7), particularly baked goods, in particular for dispensing to end consumers, said food products (6, 7) being fed to and optionally intermediately stored in a housing (8) by means of a first segment (4) of a transport device substantially parallel to the front side of the dispensing device (1) in a controlled manner, and then said food products (6, 7) being displaced substantially in the direction toward the front side of the dispensing device (1) in a controlled manner by means of a second segment (5) of the transport device, a transfer device comprising motorized pushers (11) transferring the food products (6, 7) from conveyor belts (4) of the first segment of the transport device to conveyor belts (5) of the second segment of the transport device, and a third segment implemented as an output device (14) being disposed downstream of the second segment of the transport device, **characterized in that** ramps (23) are disposed between the conveyor belts (4) of the first segment and the conveyor belts (5) of the second segment, wherein food products (6, 7) can be moved from such a conveyor belt (4) of the first segment up such a ramp (23) onto such a conveyor belt (5) of the second segment by means of such a pusher (11) in order to be output by means of said output device (14), and wherein in case of a food product (6, 7) being stored too long said product returns to said conveyor belt (4) by means of said ramp (23), said conveyor belt transporting the food product (6, 7) being stored too long to a collection container (22).

13. The method according to any one of the preceding claims, **characterized in that** the food products (6, 7) are separated from the end consumer and the environment by means of the housing (8) until the time of dispensing.

14. The method according to any one of the preceding claims, **characterized in that** the food products (6, 7) are sorted according to type or style by means of the second segment of the transport device.

15. The method according to any one of the preceding claims, **characterized in that** the food products (6, 7) are stored in a climate-controlled manner within the housing.

## Revendications

1. Dispositif de distribution pour denrées alimentaires (6, 7), en particulier pour produits de boulangerie et de pâtisserie, pour la distribution à des consommateurs finaux, avec un boîtier (8) et un dispositif de transport qui lui est attribué, sachant qu'un premier tronçon du dispositif de transport transporte les denrées alimentaires (6, 7) de manière contrôlée essentiellement parallèle à la face avant du dispositif de distribution (1), et un second tronçon du dispositif de transport transporte les denrées alimentaires (6, 7) de manière contrôlée essentiellement vers la face avant du dispositif de distribution (1), sachant qu'un dispositif de transfert, qui comporte des tiroirs (11) entraînés par moteur, transfert les denrées alimentaires (6, 7) de bandes de transport (4) du premier tronçon du dispositif de transport à des bandes de transport (5) du second tronçon du dispositif de transport, et sachant que le second tronçon du dispositif de transport est suivi d'un troisième tronçon, qui se présente sous la forme d'un dispositif de sortie (14), caractérisé en ce aue des rampes (23) sont disposées entre les bandes de transport (4) du premier tronçon et les bandes de transport (5) du second tronçon, sachant que les denrées alimentaires (6, 7) peuvent être déplacées avec un dit tiroir (11) d'une dite bande de transport (4) du premier tronçon vers le haut sur une dite rampe (23) vers une dite bande de transport (5) du second tronçon pour être délivrées par ledit dispositif de sortie (14), et sachant qu'en cas de stockage trop long d'une denrée alimentaire (6, 7), cette dernière est acheminée en retour via ladite rampe (23) sur ladite bande de transport (4), qui est capable de transporter la denrée alimentaire (6, 7) stockée trop longtemps vers un récipient de collecte (22).

2. Dispositif de distribution selon la revendication précédente, **caractérisé en ce que** le dispositif de sortie (14) ferme le dispositif de distribution (1) vers l'extérieur à l'état de repos, à l'état de sortie et dans les états intermédiaires.

3. Dispositif de distribution selon l'une des revendications précédentes, **caractérisé en ce que** le premier tronçon du dispositif de transport comporte deux bandes de transport (4) disposées l'une au-dessus de l'autre.

4. Dispositif de distribution selon l'une des revendications précédentes, **caractérisé en ce que** le second tronçon du dispositif de transport comporte deux ou plus de bandes de transport (5) disposées les unes à côté des autres.

5. Dispositif de distribution selon l'une des revendications précédentes, **caractérisé en ce qu'**une séparation physique avec une ouverture de liaison, en particulier une paroi (3), est disposée entre le premier tronçon du dispositif de transport et le second tronçon du dispositif de transport.

6. Dispositif de distribution selon l'une des revendications précédentes, **caractérisé en ce que** le troisième tronçon du dispositif de transport comporte des éléments de coque basculants (18).

7. Dispositif de distribution selon l'une des revendications précédentes, **caractérisé en ce que** le boîtier (8) isole complètement les denrées alimentaires (6, 7) vis-à-vis des consommateurs finaux.

8. Dispositif de distribution selon l'une des revendications précédentes, **caractérisé en ce que** l'espace disposé au sein du boîtier (8) est climatisé.

9. Dispositif de distribution selon l'une des revendications précédentes, **caractérisé en ce qu'**il est possible au moins partiellement de voir l'intérieur du boîtier (8).

10. Dispositif de distribution selon l'une des revendications précédentes, **caractérisé en ce que** le dispositif de distribution (1) comporte un dispositif de saisie (15) pour la saisie du type et de la quantité de marchandise souhaités.

11. Dispositif de distribution selon l'une des revendications précédentes, **caractérisé en ce que** le dispositif de distribution (1) est raccordé à au moins un dispositif de commande électronique et/ou mécanique pour la commande de la fonction de distribution.

12. Procédé pour la distribution de denrées alimentaires (6, 7), en particulier de produits de boulangerie et de pâtisserie, en particulier pour la distribution à des consommateurs finaux, sachant que les denrées alimentaires (6, 7) sont alimentées à un boitier (8) et, le cas échéant, stockées provisoirement de manière contrôlée essentiellement parallèle à la face avant du dispositif de distribution (1) à l'aide d'un premier tronçon (4) d'un dispositif de transport, et, ensuite, les denrées alimentaires (6, 7) sont transportées de manière contrôlée essentiellement vers la face avant du dispositif de distribution (1) à l'aide d'un second tronçon (5) du dispositif de transport, sachant qu'un dispositif de transfert, qui comporte des tiroirs (11) entraînés par moteur, transfert les denrées alimentaires (6, 7) de bandes de transport (4) du premier tronçon du dispositif de transport à des bandes de transport (5) du second tronçon du dispositif de transport, sachant que le second tronçon du dispositif de transport est suivi d'un troisième tronçon, qui se présente sous la forme d'un dispositif de sortie (14), **caractérisé en ce que** des rampes (23) sont disposées entre les bandes de transport (4) du premier tronçon et les bandes de transport (5) du second tronçon, sachant que les denrées alimentaires (6, 7) sont déplacées avec un dit tiroir (11) d'une dite bande de transport (4) du premier tronçon vers le haut sur une dite rampe (23) vers une dite bande de transport (5) du second tronçon pour être délivrées par ledit dispositif de sortie (14), et sachant qu'en cas de stockage trop long d'une denrée alimentaire (6, 7), cette dernière est acheminée en retour via ladite rampe (23) sur ladite bande de transport (4), qui transporte la denrée alimentaire (6, 7) stockée trop longtemps vers un récipient de collecte (22).

13. Procédé selon la revendication précédente, **caractérisé en ce que** les denrées alimentaires (6, 7) sont tenues à l'écart du consommateur final et de l'environnement à l'aide du boîtier (8) jusqu'au moment de la sortie.

14. Procédé selon l'une des revendications précédentes, **caractérisé en ce que** les denrées alimentaires (6, 7) sont triées par genre et/ou par sorte à l'aide du second tronçon du dispositif de transport.

15. Procédé selon l'une des revendications précédentes, **caractérisé en ce que** les denrées alimentaires (6, 7) sont stockés dans un environnement climatisé au sein du boîtier.
